# EUROPEAN PATENT SPECIFICATION

(11) **EP 1 693 929 B1**
(45) Date of publication and mention of the grant of the patent: **09.04.2008**
(21) Application number: 06101391.8
(22) Date of filing: 07.02.2006
(51) Int. Cl.: H01R 13/633

(54) **Cable connector**
Kabelverbinder
Connecteur pour câble

(30) Priority: 21.02.2005 JP 2005044213
(43) Date of publication of application: 23.08.2006
(73) Proprietor: Tyco Electronics AMP K.K., Kawasaki-shi, Kanagawa-ken 213-8535 (JP)
(72) Inventor: Murayama, Ryusuke Tyco Electronics AMP K.K., Kawasaki-shi, Kanagawa-ken 213-8535 (JP)
(74) Representative: Johnstone, Douglas Ian

(56) References cited:
- EP-A- 0 570 181
- EP-A- 1 065 756

## Description

The present invention relates to a cable connector having a pull-tab.

The cable connector shown in Fig. 6 (see JP63-56563U), for example, is a prior art cable connector that has a pull-tab.

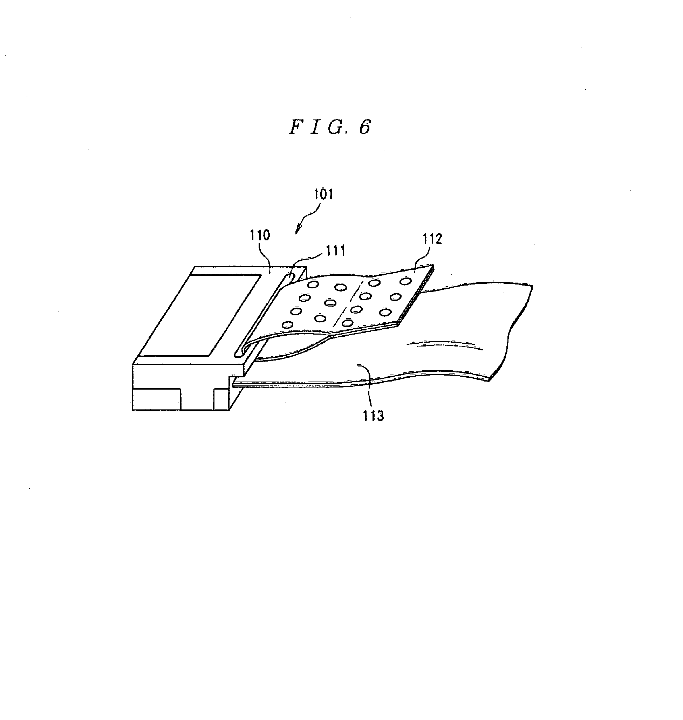

The cable connector 101 shown in Fig. 6 comprises a substantially rectangular insulating housing 110 that supports a cable 113. Furthermore, a pull-tab attachment hole 111 that extends in the direction of width of the housing 110 is formed at the end portion of the housing 110, and a belt-form pull-tab 112 is attached via this pull-tab attachment hole 111. This cable connector 101 is devised so that following the mating with a mating connector (not shown in the figure), this mating with the mating connector is released by pulling the pull-tab 112.

However, this cable connector 101 does not have a mechanism for actively locking with the mating connector at the time of mating with the mating connector, and the pull-tab 112 is not designed to perform the function of releasing the locking mechanism with the mating connector.

EP-A-0 570 181 discloses a cable connector comprising a housing that supports a cable and that has a locking arm for locking with a mating connector, and a pull-tab that is connected to this locking arm, wherein the pull-tab is inserted into a hole that is formed in an end part of the locking arm, and when the pull-tab is pulled in a substantially opposite direction from a direction of mating with the mating connector, the pull-tab moves the locking arm in a lock releasing direction.

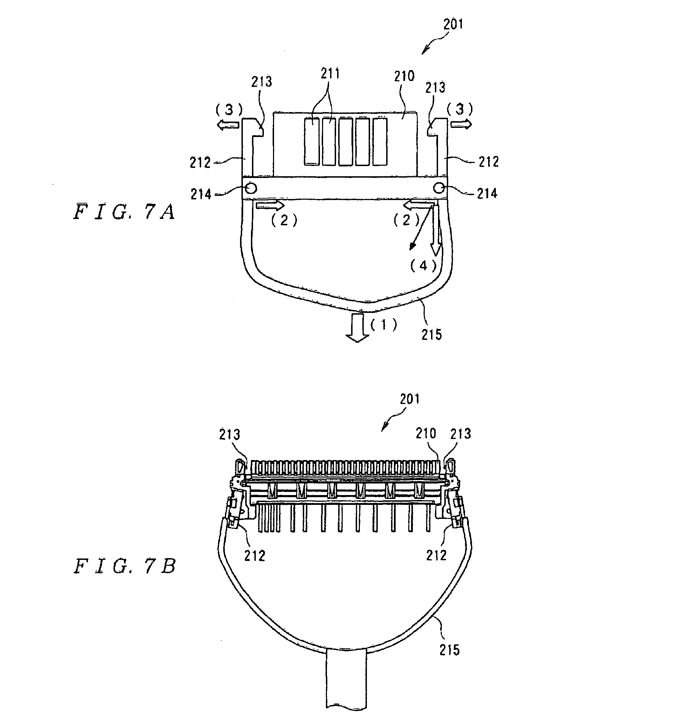

The connector shown in Figs. 7A and 7B (see JP2003-297482A) is a further prior art connector that has a pull-tab connected to a locking mechanism for locking with a mating connector, in which the pull-tab performs the function of releasing the locking mechanism. Fig. 7A is a plan view showing the construction of the connector schematically, and Fig .7B is a plan view showing the actual construction of the connector.

The connector 201 shown in Figs. 7A and 7B comprises a substantially rectangular insulating housing 210 and a plurality of contacts 211 that are attached to the housing 210 along the direction of width of this housing 210. Furthermore, a pair of locking arms 212 that are attached so that these locking arms can pivot about respective pivoting central shafts 214 are provided at either end of the housing 210 in the direction of width. Engaging claws 213 that are locked with engagement parts provided on the left and right side surfaces of a mating connector (not shown in the figures) are provided so that these engaging claws 213 protrude inwardly from the front ends (upper ends in Fig. 7A) of the respective locking arms 212. Meanwhile, both ends of a pull-tab 215 are respectively joined to the rear ends of the pair of locking arms 212. The pull-tab 215 is integrally formed with the pair of locking arms 212.

When the connector 201 is caused to mate with the mating connector, the engaging claws 213 of the respective locking arms 212 are locked with the engagement parts of the mating connector. This locking action is performed by the locking arms 212 first pivoting about the pivoting central shafts 214 in the directions indicated by arrows (3), i.e., in an outward direction, and then pivoting in the opposite directions (i.e., in an inward direction), and the locked state is maintained by the elasticity of the pull-tab 215. Accordingly, there is no accidental release of the locked state of the connector 201 with the mating connector.

The connector 201 can be disengaged from the mating connector by pulling the central portion of the pull-tab 215 with fingers in the direction of arrow (1), i.e., in the rearward direction. The force generated when the pull-tab is pulled in the direction of arrow (1) is divided between the directions indicated by arrows (2), i.e., in an inward direction, and the direction indicated by arrow (4), i.e., in the rearward direction. A moment acts on the respective locking arms 212 in the directions indicated by arrows (3) by means of the force in the directions indicated by arrows (2). As a result, these locking arms 212 respectively pivot in the directions indicated by arrows (3) about the respective pivoting central shafts 214, so that the locked state with the mating connector is released. Then, the connector 201 can be completely disengaged from the mating connector by the force in the direction of arrow (4).

However, the following problems have been encountered in the connector 201 shown in Figs. 7A and 7B.

Specifically, since the pair of locking arms 212 are required at either end of the housing 210 in the direction of width, the mounting space is correspondingly increased, so that there is a problem in that the mounting density of the connector is reduced.

Furthermore, the force other than the force in the direction of release of the locked state (force in the directions indicated by arrows (2)) during the operation of the pull-tab 215, i.e., the force in the direction of arrow (4), is applied to the locking arms 212. Accordingly, there are occasions when the locking arms 212 are damaged or deformed as a result of the force in the direction of arrow (4) being applied to the locking arms 212 when they are in a state of incomplete release of the engaging claws 213 of the locking arms 212 with the engagement parts of the mating connector. Moreover, the operating characteristics of the pull-tab 215 are also poor as a result of the application of the force in the direction of arrow (4) on the locking arms 212.

Accordingly, the present invention was devised in the light of the problems described above. It is an object of the present invention to provide a cable connector which enables high-density mounting while reducing the risk of the locking arms being damaged or deformed.

In order to solve the problems described above, the cable connector of claim 1 is a cable connector comprising a housing that supports a cable and that has a locking arm for locking with a mating connector, and a pull-tab that is connected to this locking arm, wherein the pull-tab is inserted into holes that are respectively formed in an end part of the housing and an end part of the locking arm, and when the pull-tab is pulled in a substantially opposite direction from the direction of mating with the mating connector, the pull-tab causes the relative motion between the end part of the housing and the end part of the locking arm in mutually approaching directions, thus moving the locking arm in a lock releasing direction and releasing the locked state of the locking arm with the mating connector.

Furthermore, the cable connector of claim 2 is the invention according to claim 1, wherein a wall that extends in a direction substantially or more or less perpendicular to the mating direction is provided at the end part of the housing, for orientating a cable in a direction crossing the mating direction.

Moreover, the cable connector of claim 3 is the invention according to claim 1 or 2, wherein rounded surfaces which the pull-tab contacts during the pull operation of the pull-tab are respectively formed on the end part of the housing and the end part of the locking arm.

In the cable connector of claim 1, the pull-tab is inserted into holes that are respectively formed in the end part of the housing and the end part of the locking arm, and when the pull-tab is pulled in a more or less opposite direction from the direction of mating with the mating connector, this pull-tab causes the relative motion between the end part of the housing and the end part of the locking arm in mutually approaching directions, thus releasing the locked state of the locking arm with the mating connector. Accordingly, during the pull operation of the pull-tab, a force other than the force in the direction of release of the locked state is applied by being distributed between the end part of the housing and the end part of the locking arm, and such a force is not applied to the locking arm alone, so that it is possible to significantly reduce the danger that the locking arm will be damaged or deformed. Furthermore, the pull operation of the pull-tab in a more or less opposite direction from the direction of mating with the mating connector causes the relative motion between the end part of the housing and the end part of the locking arm to be performed in mutually approaching directions, so that the locked state of the locking arm with the mating connector can be released. Accordingly, the locked state can be released smoothly even with the installation of only one locking arm, so that there is no need to install two or more locking arms, thus enabling high-density mounting of such cable connectors.

Moreover, the cable connector of claim 2 is the invention according to claim 1, wherein a wall that extends in a direction more or less perpendicular to the mating direction is provided at the end part of the housing, and the cable is oriented by the wall in a direction crossing the mating direction. Accordingly, when the cable connector is to mate with the mating connector, it is possible to press the wall, which has sufficient area for pressing with the fingers and to cause the cable connector to mate easily with mating connector. In this case, since the cable is oriented by the wall in a direction that crosses the mating direction, there is no possibility of the cable getting in the way.

In addition, the cable connector of claim 3 is the invention according to claim 1 or 2, wherein rounded surfaces which the pull-tab contacts during the pull operation of the pull-tab are respectively formed on the end part of the housing and the end part of the locking arm. Accordingly, the pull operation of the pull-tab can be performed smoothly.

The invention will now be described by way of example with reference to the accompanying drawings in which:
Fig. 1 is a front view of an assembly in which the cable connectors of the present invention are disposed on both ends of a cable;
Fig. 2 is a plan view of the assembly shown in Fig. 1;
Fig. 3 is a left-side view of the assembly shown in Fig. 1;
Fig. 4 is a sectional view along line 4-4 in Fig. 2 (here, only a section of the first housing is shown, and a mating connector and a circuit board are indicated by broken lines);
Figs. 5A to 5C show a mating connector with which the cable connector shown in Fig. 1 mates, with Fig. 5A being a plan view, Fig. 5B being a front view, and Fig. 5C being a left-side view;
Fig. 6 is a perspective view showing one example of a conventional cable connector having a pull-tab; and
Figs. 7A and 7B show a futher example of a conventional connector in which a pull-tab performs the function of releasing a locking mechanism, with Fig. 7A being a plan view showing the construction of the connector schematically, and Fig. 7B being a plan view showing the actual construction of the connector.

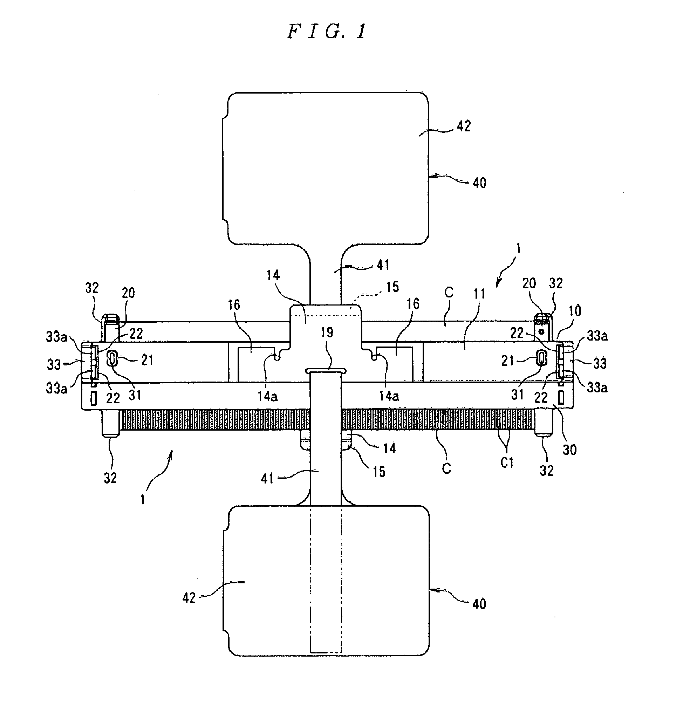

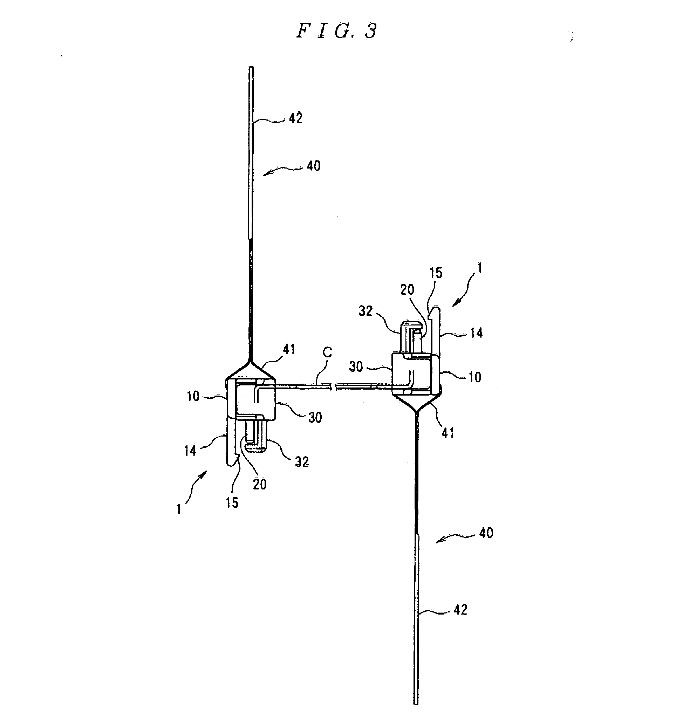

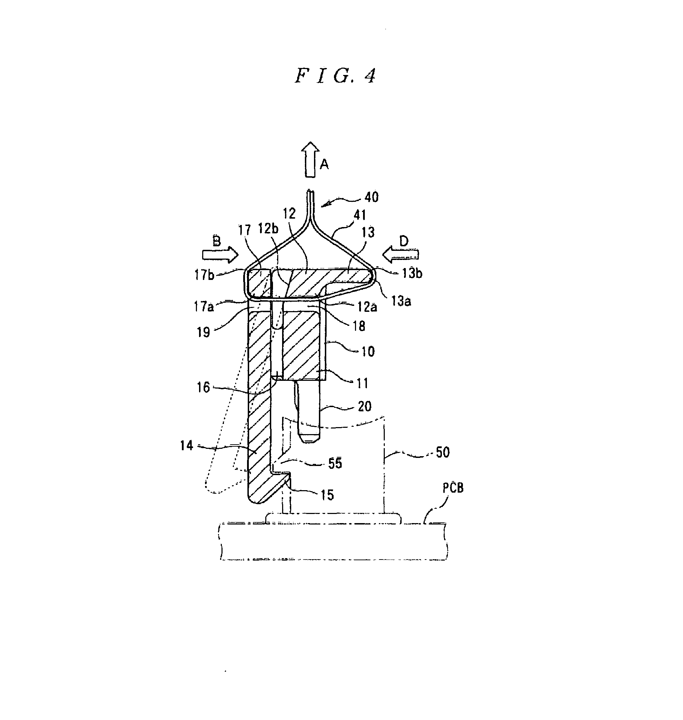

In Figs. 1 through 3, a pair of cable connectors 1 are arranged on either end of a cable C such as a flexible flat cable (FFC) in the direction of length in a state in which the tops and bottoms of these cable connectors are inverted relative to each other. As is shown in Fig. 4, each cable connector 1 is designed to mate with a mating connector 50 that is mounted on a circuit board PCB. Since the pair of cable connectors 1 have the same construction and shape, and act in the same manner, the construction and operation of the cable connector 1 that is disposed on one end of the cable C in the direction of length (on the left side in Fig. 3) will be described below.

Here, the cable connector 1 comprises a first housing 10, a second housing 30, and a pull-tab 40. The first housing 10 and the second housing 30 constitute the "housing" specified in claim 1.

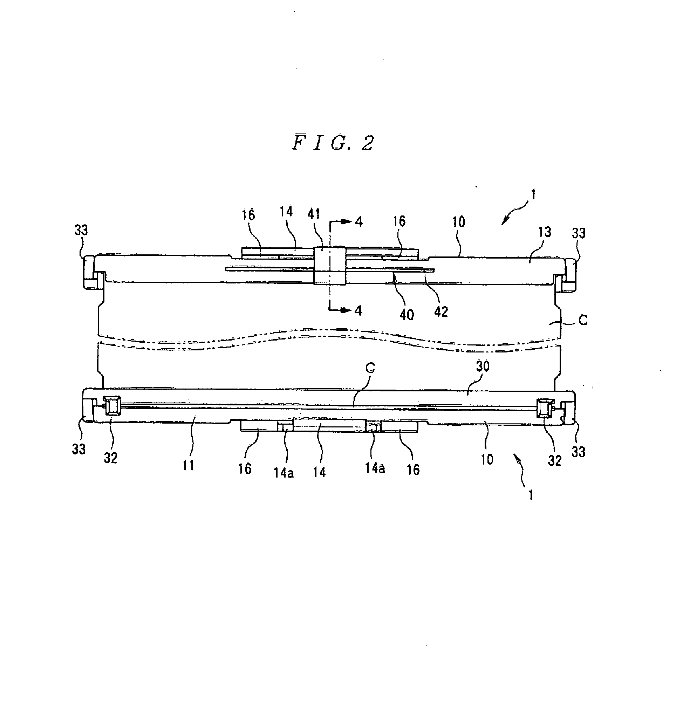

The first housing 10 is formed by molding an insulating resin, and has a substantially rectangular housing main body 11 that extends in the direction of length (left-right direction in Figs. 1 and 2). As is clearly shown in Fig. 4, at the upper end part 12 (end part toward the above in Fig. 4) of the housing main body 11, a wall 13 is formed which extends from the upper end part 12 in the cable lead-out direction which is more or less perpendicular to the direction of mating with the mating connector 50. Furthermore, a locking arm 14 that is locked with the mating connector 50 is provided in the central portion of the housing main body 11 in the direction of length. This locking arm 14 is linked with the end surface of the housing main body 11 on the opposite side from the cable lead-out direction by a pair of linking parts 16 that are present on either side of the locking arm 14 in the direction of length, and as is indicated with the broken line in Fig. 4, this locking arm 14 can swing in a direction more or less perpendicular to the mating direction by means of elastic deformation with the area around the linking parts 16 being used as the substantial center. A locking projection 15 that is locked with a locking projection 55 of the mating connector 50 is provided at the bottom end of the locking arm 14. Furthermore, as is shown in Fig. 1, a pair of notches 14a for making the locking arm 14 to be able to swing easily by means of elastic deformation are formed on either side of the locking arm 14 in the direction of length. Moreover, an inclined surface 12b for permitting movement of the upper end part 17 of the locking arm 14 when the locking arm 14 swings as indicated with the broken line in Fig. 4 is formed on the end surface of the upper end part 12 of the housing main body 11 on the opposite side from the cable lead-out direction. In addition, a first hole 18 and a second hole 19 through both of which the belt-form part 41 of the pull-tab 40 is inserted are respectively formed in the upper end part 12 of the housing main body 11 and in the upper end part 17 of the locking arm 14. The first hole 18 provided in the housing main body 11 is formed in the upper end part 12 of the housing main body 11 so that this first hole 18 extends in a direction perpendicular to the direction of mating with the mating connector 50, and the second hole 19 provided in the locking arm 14 is formed in the upper end part 17 of the locking arm 14 so that this second hole 19 also extends in a direction perpendicular to the direction of mating with the mating connector 50. Corner edge 12a in the cable lead-out direction of the first hole 18 provided in the housing main body 11, corner edges 13a and 13b of the wall 13 in the cable lead-out direction, the corner edge 17a of the second hole 19 provided in the locking arm 14 on the opposite side from the cable lead-out direction, and the corner edge 17b of the upper end part 17 of the locking arm 14 are formed as rounded surfaces. These rounded surfaces are designed to be contacted by the belt-form part 41 of the pull-tab 40 during the pulling operation of the pull-tab 40, and these rounded surfaces constitute the "rounded surfaces" stipulated in claim 3. Furthermore, as is shown in Fig. 1, a pair of engagement holes 21 which pass through in a direction perpendicular to the direction of mating with the mating connector 50 are formed in the vicinity of either end of the housing main body 11 in the direction of length. Moreover, a plurality of pairs of locking projections 22 that protrude outward are provided on either end of the housing main body 11 in the direction of length. In addition, a pair of cable supporting projections 20 that support either end of the cable C in the direction of width in cooperation with cable supporting parts 32 of the second housing 30 are formed so as to protrude from the undersurface of the housing main body 1 at either end in the direction of length.

Furthermore, the second housing 30 is formed in a substantially rectangular shape that extends in the direction of length (left-right direction in Figs. 1 and 2) by molding an insulating resin. A pair of engaging projections 31 that are inserted through through-holes (not shown in the figures) formed in one end portion of the cable C in the direction of length and that engage with the engagement holes 21 in the first housing 10 as shown in Fig. 1 are formed so that these engaging projections 31 protrude from the vicinity of either end of the second housing 30 in the direction of length. Moreover, a pair of locking arms 33 that extend so as to face the outer surfaces at both ends of the housing main body 11 in the direction of length are provided at either end of the second housing 30 in the direction of length, and locking parts 33a that are locked with the locking projections 22 of the first housing 10 are formed so as to protrude from the inner surface of each of the locking arms 33. The second housing 30 is attached to the first housing 10 by the locking projections 31 being inserted through the through-holes in the cable C and engaged with the engagement holes 21 in the first housing 10 and by the locking parts 33a being locked with the engaging projections 22 of the first housing 10. As a result, this one end portion of the cable C is supported in the direction of length. Furthermore, the two ends of the cable C are supported in the direction of width by being held between the cable supporting projections 20 of the first housing 10 and between the cable supporting parts 32 of the second housing 30. As is shown in Fig. 3, when the one end portion of the cable C is supported in the direction of length by the first housing 10 and the second housing 30, this end of the cable C is provided with a plurality of conductive pads C1 (see Fig. 1) and is oriented towards the direction of mating with the mating connector 50, and the opposite end of the cable C is oriented by the wall 13 of the first housing 10 towards a direction perpendicular to the mating direction (i.e., towards the cable lead-out direction).

Furthermore, the pull-tab 40 comprises a belt-form part 41 that is inserted through the first hole 18 in the housing main body 11 and the second hole 19 in the locking arm 14, and a pull operation part 42 that connects both ends of the belt-form part 41. The pull operation part 42 is formed in a substantially rectangular shape that has a large width compared to the width of the belt-form part 41. When the pull operation part 42 of the pull-tab 40 is pulled in a more or less opposite direction from the direction of mating with the mating connector 50, i.e., in the direction of arrow A in Fig. 4, a force acts on the upper end part 17 of the locking arm 14 in the cable lead-out direction which is perpendicular to the direction of mating with the mating connector 50, i.e., in the direction of arrow B, and a force also acts on the upper end part 12 of the housing main body 11 in the opposite direction to the cable lead-out direction, i.e., in the direction of arrow D, which causes the locking arm 14 to swing as indicated by the broken line in Fig. 4, and thus causes relative motion between the upper end part 12 of the housing main body 11 1 and the upper end part 17 of the locking arm 14 in mutually approaching directions. As a result, the locked state of the locking projection 15 of the locking arm 14 with the locking projection 55 of the mating connector 50 is released.

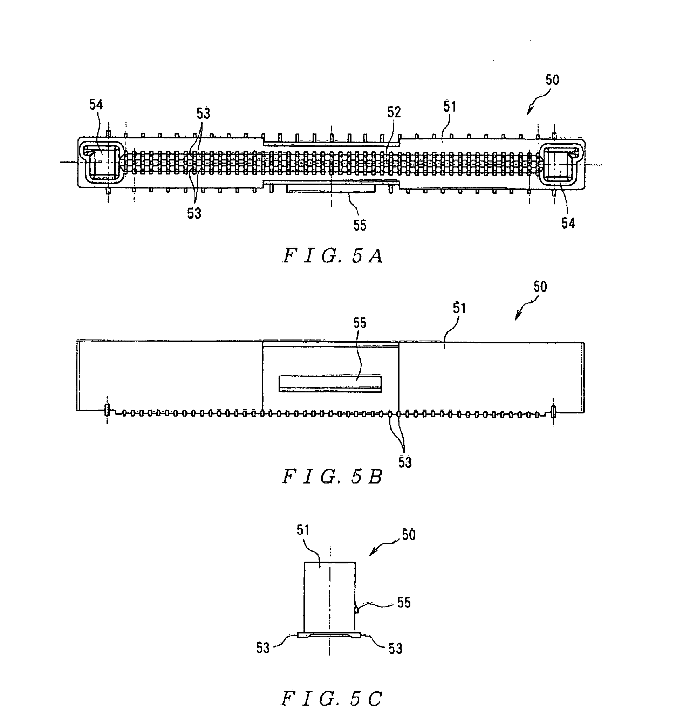

The mating connector 50 comprises a mating housing 51 that is formed by molding an insulating resin and that extends in the direction of length (left-right direction in Fig. 5A). The mating housing 51 comprises a cable receiving recessed part 52 that receives the end portion of the cable C in the direction of length, and a pair of receiving recessed parts 54 that are provided at either end portion of the cable receiving recessed part 52 in the direction of length and that respectively guide and receive the cable supporting projections 20 and cable supporting parts 32 of the cable connector 1. Furthermore, the mating housing 51 is provided with a plurality of contacts 53 that are formed so as to protrude from both the front and rear surfaces (both upper and lower surfaces in Fig. 5A) of the cable receiving recessed part 52 into the interior of the cable receiving recessed part 52. These contacts 53 are connected by soldering to the conductor pattern (not shown in the figures) on the circuit board PCB. Moreover, the locking projection 55, with which the locking projection 15 of the cable connector 1 is locked, is formed so as to protrude from the front wall of the mating housing 51 in the central portion in the direction of length.

Furthermore, when the cable connector 1 is caused to mate with the mating connector 50, the end portion of the cable C in the direction of length that is supported by the cable connector 1 is inserted into the cable receiving recessed part 52 of the mating connector 50, and the cable supporting projections 20 and cable supporting parts 32 of the cable connector 1 are inserted into the receiving recessed parts 54. As a result, the conductive pads C1 of the cable C and the contacts 53 are connected.

Meanwhile, when the cable connector 1 is caused to mate with the mating connector 50, the locking projection 15 of the locking arm 14 of the cable connector 1 is locked with the locking projection 55 of the mating connector 50 as shown in Fig. 4. This locking action is accomplished by the locking arm 14 first swinging by means of elastic deformation using the area around the linking parts 16 as the substantial center in the opposite direction from the cable lead-out direction which is more or less perpendicular to the direction of mating with the mating connector 50, and the locking arm 14 then returns to the original position. Furthermore, the locked state of the locking arm 14 is maintained by the elastic force of the locking arm 14. Accordingly, there is no accidental release of the locked state of the cable connector 1 with the mating connector 50.

The wall 13 that extends in a direction, which is more or less perpendicular to the direction of mating with the mating connector 50, is provided on the upper end part 12 of the housing main body 11 of the cable connector 1, and the cable C is oriented by this wall 13 to extend in a direction crossing this mating direction. Accordingly, when the cable connector 1 is to mate with the mating connector 50, it is possible to press the wall 13, which has sufficient area for pressing with the fingers, and to cause the cable connector 1 to mate easily with mating connector 50. In this case, since the cable C is oriented by the wall 13 to extend in a direction perpendicular to the mating direction, there is no possibility of the cable C getting in the way.

Furthermore, in order to disengage the cable connector 1 from the mating connector 50, the pull operation part 42 of the pull-tab 40 is pulled with the fingers in a more or less opposite direction from the direction of mating with the mating connector 50, i.e., in the direction of arrow A in Fig. 4. Then, a force acts on the upper end part 17 of the locking arm 14 in the cable lead-out direction which is perpendicular to the direction of mating with the mating connector 50, i.e., in the direction of arrow B, and a force also acts on the upper end part 12 of the housing main body 11 in the opposite direction from the cable lead-out direction, i.e., in the direction of arrow D. This causes the locking arm 14 to swing, with the area around the linking parts 16 being used as the substantial center, in the opposite direction from the cable lead-out direction which is more or less perpendicular to the direction of mating with the mating connector 50, i.e., as indicated with the broken line in Fig. 4. As a result, relative motion is performed between the upper end part 12 of the housing main body 11 and the upper end part 17 of the locking arm 14 in mutually approaching directions. This releases the locked state of the locking projection 15 of the locking arm 14 with the locking projection 55 of the mating connector 50. Accordingly, if the pull operation part 42 of the pull-tab 40 is continued to be pulled in the direction of arrow A, the cable connector 1 can be disengaged from the mating connector 50.

During this pull operation of the pull-tab 40, the force other than the force in the direction of release of the locked state, i.e., the force in the direction of arrow A, is applied by being distributed between the upper end part 12 of the housing main body 11 and the upper end part 17 of the locking arm 14. Therefore, such a force is not applied to the locking arm 14 alone, so that it is possible to significantly reduce the danger that the locking arm 14 will be damaged or deformed. Furthermore, the locked state of the locking arm 14 with the mating connector 50 can be released by the pull operation of the pull-tab 40 in a more or less opposite direction from the direction of mating with the mating connector 50 so that relative motion is performed between the upper end part 12 of the housing main body 11 and the upper end part 17 of the locking arm 14 in mutually approaching directions. Accordingly, the locked state can be released smoothly even by the installation of only one locking arm 14, so that it is not necessary to install two or more locking arms 14, thus enabling high-density mounting of the cable connector 1.

Moreover, the corner edge 12a in the cable lead-out direction of the first hole 18 provided in the housing main body 11, the corner edges 13a and 13b of the wall 13 in the cable lead-out direction, the corner edge 17a of the second hole 19 provided in the locking arm 14 on the opposite side from the cable lead-out direction, and the corner edge 17b of the upper end part 17 of the locking arm 14 are formed as rounded surfaces, and these rounded surfaces are designed to be contacted by the belt-form part 41 of the pull-tab 40 during the pull operation of the pull-tab 40. Accordingly, the pull operation of the pull-tab 40 can be smoothly performed.

An embodiment of the present invention has been described above. However, the present invention is not limited to this embodiment, and various alterations and modifications can be made.

For example, there is no need to construct the housing that supports the cable from the first housing 10 and second housing 20, i.e., from two bodies; this housing may also be constructed from a single body.

Furthermore, the direction in which the cable C is oriented by the wall 13 is not limited to the direction perpendicular to the direction of mating with the mating connector 50; this direction may also be any direction that crosses the direction of mating with the mating connector 50.

## Claims

1. A cable connector (1) comprising a housing (10,30) that supports a cable (C) and that has a locking arm (14) for locking with a mating connector (50), and a pull-tab (40) that is connected to this locking arm (14), wherein
the pull-tab (40) is inserted into holes (18,19) that are respectively formed in an end part (12) of the housing (10,30) and an end part (17) of the locking arm (14), and
when the pull-tab (40) is pulled in a substantially opposite direction (A) from a direction of mating with the mating connector (50), the pull-tab (40) causes a relative motion between the end part (12) of the housing (10,30) and the end part (17) of the locking arm (14) in mutually approaching directions (D,B), thus moving the locking arm (14) in a lock releasing direction

2. The cable connector (1) according to claim 1, wherein a wall (13) that extends in a direction substantially perpendicularly to the mating direction is provided at the end part (12) of the housing (10,30), for orientating a cable (C) in a direction crossing the mating direction.

3. The cable connector (1) according to claim 1 or 2, wherein rounded surfaces (13a,13b,17a,17b) which the pull-tab contacts during the pull operation of the pull-tab are respectively formed on the end part (12) of the housing (10,30) and the end part (17) of the locking arm (14).

4. A cable connector (1) as claimed in any preceding claim in combination with a mating connector (50) wherein moving the locking arm (14) in a lock releasing direction releases the locking arm (14) from a locked state with the mating connector (50).

## Patentansprüche

1. Kabelverbinder (1), der aufweist: ein Gehäuse (10, 30), das ein Kabel (C) trägt, und das einen Sperrarm (14) für das Sperren mit einem Gegensteckverbinder (50) aufweist; und eine Zuglasche (40), die mit diesem Sperrarm (14) verbunden ist, wobei
die Zuglasche (40) in die Löcher (18, 19) eingesetzt wird, die jeweils in einem Endteil (12) des Gehäuses (10, 30) und einem Endteil (17) des Sperrarmes (14) gebildet werden, und,
wenn die Zuglasche (40) in einer im Wesentlichen entgegengesetzten Richtung (A) von einer Richtung des Eingriffes mit dem Gegensteckverbinder (50) gezogen wird, bewirkt die Zuglasche (40) eine relative Bewegung zwischen dem Endteil (12) des Gehäuses (10, 30) und dem Endteil (17) des Sperrarmes (14) in sich gegenseitig annähernden Richtungen (D, B), wodurch der Sperrarm (14) in einer Sperrfreigaberichtung bewegt wird.

2. Kabelverbinder (1) nach Anspruch 1, bei dem eine Wand (13), die sich in einer Richtung im Wesentlichen senkrecht zur Eingriffsrichtung erstreckt, am Endteil (12) des Gehäuses (10, 30) für das Ausrichten eines Kabels (C) in einer Richtung bereitgestellt wird, die die Eingriffsrichtung kreuzt.

3. Kabelverbinder (1) nach Anspruch 1 oder 2, bei dem abgerundete Flächen (13a, 13b, 17a, 17b), die die Zuglasche während des Zugvorganges der Zuglasche berührt, jeweils am Endteil (12) des Gehäuses (10, 30) und dem Endteil (17) des Sperrarmes (14) gebildet werden.

4. Kabelverbinder (1) nach einem der vorhergehenden Ansprüche in Kombination mit einem Gegensteckverbinder (50), bei dem das Bewegen des Sperrarmes (14) in einer Sperrfreigaberichtung den Sperrarm (14) aus einem Sperrzustand mit dem Gegensteckverbinder (50) freigibt.

## Revendications

1. Connecteur de câble (1), comprenant un boîtier (10, 30) supportant un câble (C) et comportant un bras de verrouillage (14) en vue du verrouillage avec un connecteur d'accouplement (50), et une patte de traction (40) connectée à ce bras de verrouillage (14), dans lequel
la patte de traction (40) est insérée dans des trous (18, 19) formés respectivement dans une partie d'extrémité (12) du boîtier (10, 30) et dans une partie d'extrémité (17) du bras de verrouillage (14); et
la traction de la patte de traction (40) dans une direction pratiquement opposée (A) à une direction d'accouplement avec le connecteur d'accouplement (50) entraînant un déplacement relatif par la patte de traction (40) de la partie d'extrémité (12) du boîtier (10, 30) et de la partie d'extrémité (17) du bras de verrouillage (14) dans des directions les rapprochant l'une de l'autre (D, B), déplaçant ainsi le bras de verrouillage (14) dans une direction de dégagement du verrouillage.

2. Connecteur de câble (1) selon la revendication 1, dans lequel une paroi (13) s'étendant dans une direction pratiquement perpendiculaire à la direction d'accouplement est agencée au niveau de la partie d'extrémité du boîtier (10, 30) pour orienter un câble (C) dans une direction croisant la direction d'accouplement.

3. Connecteur de câble (1) selon les revendications 1 ou 2, dans lequel des surfaces arrondies (13a, 13b, 17a, 17b) contactées par la patte de traction au cours de l'opération de traction de la patte de traction sont respectivement formées sur la partie d'extrémité (12) du boîtier (10, 30) et la partie d'extrémité (17) du bras de verrouillage (14).

4. Connecteur de câble (1) selon l'une quelconque des revendications précédentes, en combinaison avec un connecteur d'accouplement (50), dans lequel le déplacement du bras de verrouillage (14) dans une direction de dégagement du verrouillage dégage le bras de verrouillage (14) de l'état verrouillé avec le connecteur d'accouplement (50).
